Europäisches Patentamt

European Patent Office

Office européen des brevets

(11) Numéro de publication: **0 312 460 B1**

# FASCICULE DE BREVET EUROPEEN

(45) Date de publication de fascicule du brevet: **16.09.92**

(51) Int. Cl.5: **G21F 7/00**, F16J 13/12, F16L 21/02

(21) Numéro de dépôt: **88402597.4**

(22) Date de dépôt: **13.10.88**

(54) **Dipositif de raccordement déconnectable de deux enceintes étanches.**

(30) Priorité: **15.10.87 FR 8714250**

(43) Date de publication de la demande:
**19.04.89 Bulletin 89/16**

(45) Mention de la délivrance du brevet:
**16.09.92 Bulletin 92/38**

(84) Etats contractants désignés:
**BE DE GB IT**

(56) Documents cités:
| | |
|---|---|
| **DE-A- 1 500 680** | **DE-A- 3 114 150** |
| **FR-A- 1 357 712** | **FR-A- 2 560 710** |
| **FR-A- 2 573 909** | **FR-A- 2 613 526** |
| **GB-A- 866 902** | **GB-A- 1 130 273** |

(73) Titulaire: **COMMISSARIAT A L'ENERGIE ATO-MIOUE Etablissement de Caractère Scientifi-que Technique et Industriel**
**31/33, rue de la Fédération**
**F-75015 Paris(FR)**

Titulaire: **EURITECH**
**12, rue du 20ème Chasseurs**
**F-41100 Vendôme(FR)**

(72) Inventeur: **Reboul, Michel**
**Ouartier d'Arbousset Saint Victor La Coste**
**F-30290 Laudun(FR)**
Inventeur: **Glachet, Charles**
**42, rue du Maréchal de Rochambeau**
**F-41100 Vendôme(FR)**

(74) Mandataire: **Mongrédien, André et al**
**c/o BREVATOME 25, rue de Ponthieu**
**F-75008 Paris(FR)**

Rank Xerox (UK) Business Services

## Description

L'invention concerne un dispositif déconnectable permettant de raccorder deux enceintes étanches telles que des cellules de confinement utilisées dans l'industrie nucléaire.

Pour la mise en oeuvre de certains procédés, il arrive que plusieurs enceintes étanches soient raccordées, de façon à communiquer en permanence. Cette situation se présente notamment dans l'industrie nucléaire, par exemple lors du démantèlement des assemblages de combustible nucléaire irradiés dans les réacteurs. Les machines effectuant successivement les différentes opérations de démantèlement sont alors placées dans des enceintes différentes communiquant entre elles.

Pour assurer le raccordement de deux enceintes voisines, il est nécessaire de tenir compte des décalages pouvant atteindre quelques millimètres, qui existent par construction entre les axes des ouvertures en vis-à-vis par lesquelles les enceintes doivent être raccordées. Ces décalages, dus aux tolérances de fabrication des enceintes, peuvent être aussi bien angulaires que latéraux.

En outre, bien que la mise en communication de ces enceintes soit pratiquement permanente, il peut arriver qu'une interruption de la communication soit nécessaire. Cette situation se présente notamment lors du démantèlement de l'installation. Elle peut aussi se produire dans certains cas particuliers d'intervention dans l'une des cellules. Il est donc nécessaire de disposer d'un dispositif déconnectable et dont la conception permette d'éviter toute rupture du confinement lors de la séparation des enceintes.

En raison de son caractère déconnectable, un tel dispositif de raccordement implique de plus l'utilisation d'organes d'étanchéité dont l'efficacité doit pouvoir être contrôlée et dont le remplacement doit pouvoir être effectué de façon aussi simple que possible.

Le document FR-A-1 357 712 décrit un dispositif de raccordement de deux enceintes étanches comprenant : un ensemble pour mettre en communication l'ouverture des enceintes, un système de brides, des doubles portes et des joints d'étanchéité.

L'invention a précisément pour objet un dispositif de raccordement déconnectable de deux enceintes étanches dont la conception lui permet d'être utilisé même lorsque les ouvertures de raccordement en vis-à-vis formées sur ces enceintes ont leurs axes légèrement décalés angulairement et/ou latéralement, ce dispositif permettant de plus d'interrompre la communication entre les deux enceintes lorsque cela est nécessaire et, le cas échéant, de séparer celles-ci sans rupture du confinement.

L'invention a aussi pour objet un dispositif de raccordement déconnectable de deux enceintes étanches dont la conception facilite grandement le remplacement des organes assurant l'étanchéité.

A cet effet, il est proposé conformément à l'invention, un dispositif de raccordement déconnectable de deux enceintes étanches présentant chacune une ouverture de raccordement délimitée par une bride, les ouvertures de raccordement des deux enceintes étant approximativement alignées selon un axe commun et les brides étant écartées l'une de l'autre d'une distance approximative donnée, ce dispositif comportant :

- un ensemble pour mettre en communication les ouvertures de raccordement des enceintes, de façon étanche vis-à-vis de l'extérieur des enceintes, cet ensemble comprenant une pièce de référence pourvue de moyens d'immobilisation par rapport aux brides des cellules, deux pièces de liaison coopérant avec la pièce de référence par l'intermédiaire de moyens d'immobilisation en rotation autour de l'axe des ouvertures de raccordement, ces pièces de liaison coopérant entre elles de façon étanche pour définir un passage interne apte à relier les ouvertures de raccordement, chacune des pièces de liaison portant au moins un organe d'étanchéité apte à venir en appui étanche sur l'une des brides, ledit ensemble comprenant enfin des moyens pour commander un déplacement relatif entre les pièces de liaison parallèlement audit axe, et

- au moins une double porte formée de deux portes maintenues accolées par des organes magnétiques autorisant un glissement relatif limité entre les portes, ces deux portes pouvant venir s'emboîter de façon étanche respectivement à l'intérieur de l'ouverture de raccordement formée dans la bride de l'une des enceintes et du passage formé dans la pièce de liaison adjacente, lorsque ledit ensemble assure une communication étanche entre les enceintes.

La conception de ce dispositif est telle qu'un éventuel décalage latéral et/ou angulaire entre les axes des ouvertures de raccordement des enceintes n'empêche pas le raccordement étanche des deux enceintes. En effet, les pièces de liaison peuvent dans tous les cas être appliquées de façon étanche contre les brides et tout décalage latéral peut être compensé par un glissement relatif entre chacune des portes des doubles portes lors de leur mise en place.

En outre, tous les organes d'étanchéité appartiennent à l'ensemble qui est placé entre les brides, de sorte qu'en cas de défaillance d'un ou plusieurs de ces organes, l'installation peut être remise en état en remplaçant cet ensemble par un ensemble neuf, après que deux doubles portes aient été mises en place pour préserver le confinement des enceintes vis-à-vis de l'extérieur.

Dans un mode de réalisation particulier de l'invention, la pièce de référence comprend une bague entourant les pièces de liaison, les moyens d'immobilisation de ces dernières en rotation comprenant au moins une tige solidaire de chacune des pièces de liaison et faisant saillie radialement par rapport audit axe au travers d'une encoche formée dans ladite bague, parallèlement audit axe.

Les moyens pour commander un déplacement relatif entre les pièces de liaison peuvent alors comprendre une couronne entourant ladite bague, des moyens pour commander une rotation de cette couronne autour dudit axe, et des fentes formées sur la couronne et avec lesquelles coopèrent des extrémités en saillie desdites tiges.

Dans une première réalisation de l'invention, les fentes formées sur la couronne sont inclinées symétriquement en sens opposé par rapport à une direction circonférentielle, afin qu'une rotation de la couronne provoque un déplacement simultané et en sens inverse des pièces de liaison parallèlement audit axe.

Dans une deuxième réalisation de l'invention, les fentes formées sur la couronne comprennent des secteurs successifs différents, orientés circonférentiellement et inclinés par rapport à une direction circonférentielle, afin qu'une rotation de la couronne dans un premier sens provoque un déplacement d'une première des pièces de liaison parallèlement audit axe et qu'une rotation de la couronne en sens opposé provoque successivement un déplacement de l'autre pièce de liaison, puis un déplacement en sens inverse de la première pièce de liaison parallèlement audit axe.

De préférence, la pièce de référence comprend alors également un cadre disposé à l'extérieur de la couronne, ce cadre étant solidarisé de la bague par au moins trois pattes de fixation orientées radialement et régulièrement réparties autour dudit axe, ces pattes traversant des fentes circonférentielles formées dans la couronne, les moyens pour commander une rotation de cette dernière autour dudit axe étant interposés entre le cadre et la couronne.

Afin de s'assurer que les pièces de liaison sont bien en appui étanche contre les brides même en cas de décalage angulaire entre les axes des ouvertures de raccordement formées entre celles-ci, des moyens élastiques sont interposés de préférence entre les pièces de liaison, pour solliciter ces dernières en écartement l'une de l'autre.

De préférence, afin de garantir l'étanchéité entre l'intérieur des enceintes et l'extérieur et de permettre un contrôle de cette étanchéité, deux organes d'étanchéité concentriques définissant entre eux une chambre annulaire de contrôle d'étanchéité entourant ledit passage sont interposés entre les deux pièces de liaison. De même, chaque pièce de liaison porte deux joints à lèvres concentriques entourant ledit passage, aptes à venir en appui étanche sur l'une des brides. Un conduit de contrôle d'étanchéité peut alors être formé dans chacune des pièces de liaison et débouche entre les joints à lèvres.

Selon un mode de réalisation de l'invention, une première des portes de chaque double porte, apte à venir s'emboîter dans l'une des pièces de liaison, comprend un bord périphérique extérieur présentant trois gorges adjacentes, la deuxième porte de chaque double porte, apte à venir s'emboîter dans l'une des brides, comprenant un bord périphérique extérieur présentant une autre gorge, un joint torique étant apte à rouler entre les deux gorges de la première porte les plus éloignées de la deuxième porte, sous l'effet de sa coopération avec une surface intérieure cylindrique de la pièce de liaison, et un bourrelet torique formé à une extrémité d'une jupe entourant le bord périphérique de la deuxième porte et fixée à cette dernière par son extrémité opposée étant apte à rouler entre la gorge de la première porte la plus proche de la deuxième porte et la gorge de la deuxième porte, sous l'effet de sa coopération avec une surface intérieure cylindrique de la bride.

En variante, chacune des portes est munie d'un joint à lèvre sur sa surface périphérique extérieure. Selon le cas, l'une des portes comporte un joint d'étanchéité annulaire à la périphérie de la face de cette porte tournée vers l'autre porte, ou un bracelet d'étanchéité peut être enroulé sur les parties adjacentes des surfaces périphériques des portes.

Un mode de réalisation particulier de l'invention va maintenant être décrit, à titre d'exemple nullement limitatif, en se référant aux dessins annexés dans lesquels :

- la figure 1 est une vue de côté, en coupe verticale, illustrant de façon très schématique la mise en place du dispositif de raccordement déconnectable selon l'invention entre deux enceintes étanches,
- la figure 2 est une vue analogue à la figure 1 illustrant de façon schématique la déconnexion du dispositif de raccordement selon l'invention,
- la figure 3 est une vue en coupe illustrant à plus grande échelle le dispositif des figures 1 et 2 lorsqu'il assure le raccordement des deux enceintes,
- la figure 4 est une vue schématique, en coupe selon la ligne IV-IV de la figure 5, illustrant le dispositif en cours de déconnexion,

- la figure 5 est une vue de côté représentant une partie du dispositif de la figure 4,
- la figure 6 est une vue de face du dispositif selon l'invention représentant, de façon schématique, la mise en place de ce dispositif entre les enceintes,
- les figures 7a, 7b et 7c sont des vues en coupe schématiques représentant successivement la mise en place d'une double porte du dispositif, puis la déconnexion de celui-ci,
- la figure 8 est une vue en coupe verticale illustrant schématiquement un outil destiné au transport et à la mise en place de chacune des doubles portes et à l'extraction de la porte de la cellule,
- la figure 9 est une vue en plan de l'outil de la figure 8, équipé de sa double porte,
- la figure 10 est une vue en coupe verticale schématique illustrant un outil destiné à l'extraction de la porte obturant l'une des pièces de liaison,
- les figures 11 et 12 sont des vues en coupe à plus grande échelle illustrant deux variantes de réalisation permettant d'assurer l'étanchéité entre les portes et les brides correspondantes et le confinement de l'espace interporte, et
- la figure 13 est une vue comparable à la figure 5 illustrant une variante de réalisation de l'invention.

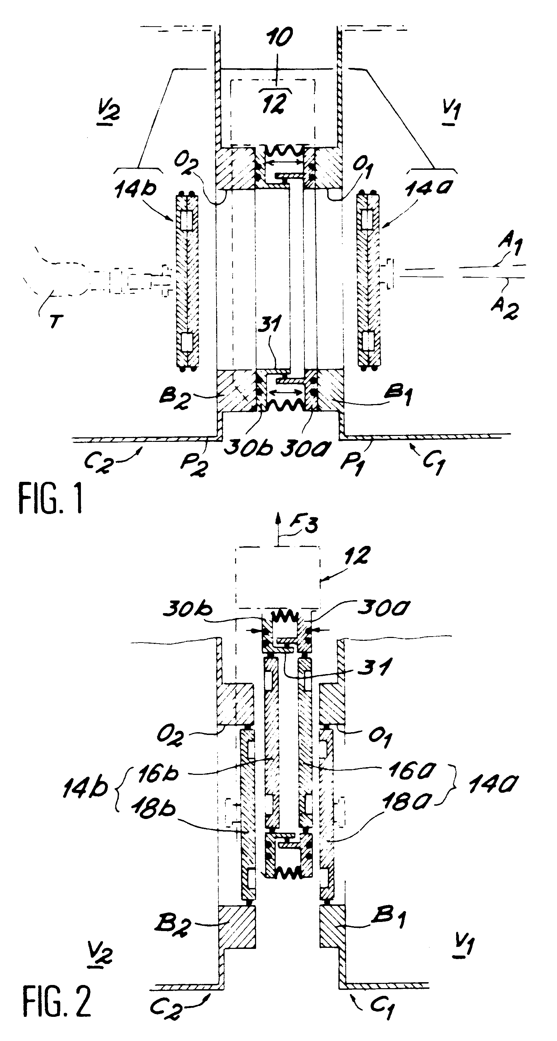

Sur la figure 1, on a représenté de façon très schématique les parties adjacentes de deux cellules de confinement $C_1$ et $C_2$ mises en communication par un dispositif de raccordement 10 conforme à l'invention, de façon étanche par rapport à l'extérieur.

Chacune des cellules $C_1$ et $C_2$ comprend une paroi $P_1$, $P_2$ de protection , délimitant un volume clos $V_1$, $V_2$. Selon l'application envisagée, les cellules $C_1$ et $C_2$ ainsi que le dispositif de raccordement 10 peuvent être entourés d'une paroi de protection (non représentée) réalisée par exemple en béton.

Les cellules $C_1$ et $C_2$ sont normalement immobilisées dans leur position de travail illustrée sur la figure 1 par des moyens non représentés. Dans cette position, les parois $P_1$ et $P_2$ des deux cellules présentent deux parties en vis-à-vis approximativement parallèles entre elles et séparées par une distance relativement faible. Chacune de ces parties en vis-à-vis est traversée par une ouverture de raccordement $O_1$, $O_2$ délimitée par une bride $B_1$, $B_2$ soudée sur la paroi correspondante. Ces ouvertures $O_1$, $O_2$ délimitent des surfaces intérieures cylindriques de même diamètre.

Comme on l'a représenté sur la droite de la figure 1, les axes $A_1$ et $A_2$ de ces ouvertures présentent généralement un décalage angulaire et/ou latéral l'un par rapport à l'autre. Ce décalage est dû à la fois aux tolérances de fabrication des cellules et à l'imprécision de leur positionnement. Il peut atteindre plusieurs millimètres.

Le dispositif 10 conforme à l'invention est conçu pour permettre la mise en communication étanche vis-à-vis de l'extérieur des ouvertures $O_1$ et $O_2$ et la séparation éventuelle des cellules sans rompre à aucun moment le confinement des volumes clos $V_1$ et $V_2$ vis-à-vis de l'atmosphère extérieure, malgré l'alignement imprécis des ouvertures $O_1$ et $O_2$.

Comme l'illustre très schématiquement la figure 1, le dispositif de raccordement 10 comprend à cet effet un ensemble 12 assurant après mise en place la communication étanche vis-à-vis de l'extérieur des ouvertures $O_1$ et $O_2$. Le dispositif de raccordement 10 comprend de plus deux doubles portes 14a et 14b permettant de séparer les cellules $C_1$ et $C_2$ sans rupture d'étanchéité vis-à-vis de l'extérieur.

Comme le montre très schématiquement la figure 1, l'ensemble 12 est prévu pour être placé entre les parois en vis-à-vis des cellules $C_1$ et $C_2$. Son épaisseur est donc inférieure à la distance séparant les parois en vis-à-vis dans lesquelles sont formées les ouvertures $O_1$ et $O_2$. Plus précisément, l'ensemble 12 comprend une partie d'épaisseur variable formée de deux pièces de liaison 30a et 30b, mobiles l'une par rapport à l'autre, selon l'axe des ouvertures $O_1$ et $O_2$. Ces pièces de liaison sont placées entre les brides $B_1$ et $B_2$ et elles délimitent un passage 31 dont la forme et les dimensions sont identiques à celles des ouvertures $O_1$ et $O_2$.

Par ailleurs, les doubles portes 14a et 14b peuvent être placées à demeure dans les cellules $C_1$ et $C_2$. Cependant, au moins l'une des cellules est généralement équipée d'une ouverture d'accès (non représentée) de dimensions égales ou supérieures à celles des ouvertures $O_1$ et $O_2$, par laquelle les doubles portes sont introduites lorsque leur mise en place est nécessaire. En effet, les doubles portes 14a, 14b sont dimensionnées de façon à pouvoir traverser le passage 31 reliant les ouvertures $O_1$ et $O_2$ lorsque les joints qu'elles supportent et qui seront décrits ultérieurement sont partiellement déboîtés en deux emplacements diamétralement opposés de la double porte. Cette mise en place peut notamment être faite à l'aide d'un bras de télémanipulateur T, comme l'illustre la figure 1, à partir de la cellule correspondante. On verra ultérieurement que lors de leur transport et de leur mise en place, les doubles portes sont de préférence associées à un outil approprié.

Comme l'illustre la figure 2, chacune des doubles portes 14a et 14b est constituée d'une première porte 16a, 16b qui vient s'emboîter dans le passage 31 formé dans la pièce de liaison 30a, 30b correspondante et d'une deuxième porte 18a, 18b qui vient s'emboîter dans l'ouverture O$_1$, O$_2$ correspondante. Après mise en place des doubles portes, une rétraction de la partie d'épaisseur variable formée par les pièces 30a et 30b a pour effet de déconnecter au moins l'une des portes 16a et 16b de la porte 18a, 18b correspondante, de sorte que l'ensemble 12 portant les portes 16a et 16b peut être démonté sans aucune rupture du confinement des volumes V$_1$ et V$_2$, les ouvertures O$_1$ et O$_2$ restant obturées par les portes 18a et 18b.

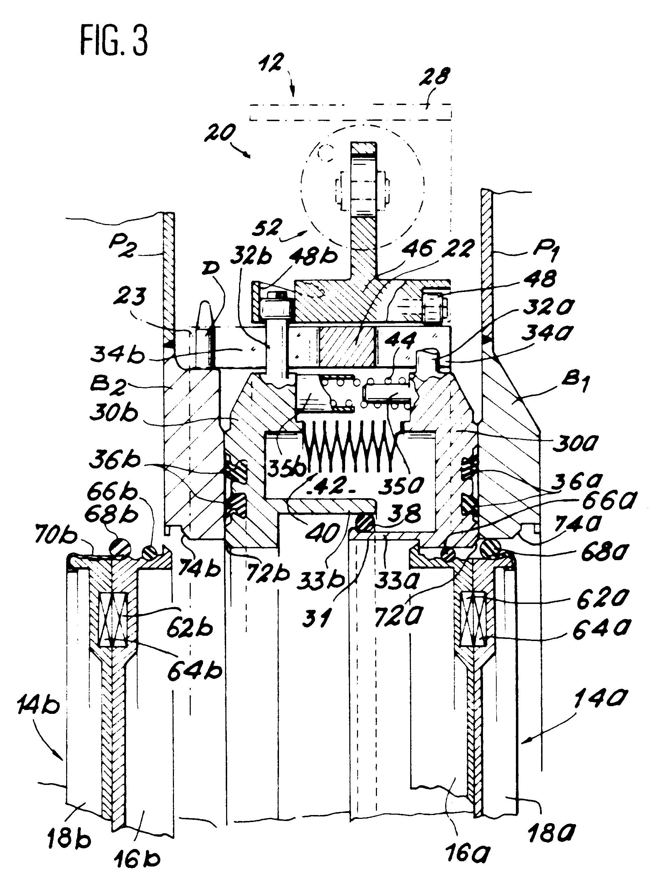

Comme l'illustrent plus en détail les figures 3 à 6, l'ensemble 12 du dispositif 10 selon l'invention comprend une pièce de référence 20 assurant le positionnement et la fixation du dispositif entre les brides B$_1$ et B$_2$.

De façon plus précise, la pièce de référence 20 comprend une bague 22 qui entoure les pièces de liaison 30a et 30b. Cette bague 22 se prolonge à l'une de ses extrémités pour former un berceau 23 en forme de U, apte à venir reposer sur une partie en saillie de l'une des brides B$_1$ et B$_2$ (la bride B$_2$ sur la figure 3). Un doigt D faisant saillie sur la bride B$_2$ vient alors se loger dans une encoche 34b formée sur la bague 22 pour immobiliser en rotation la pièce de référence 20 par rapport aux brides B$_1$ et B$_2$. On assure ainsi simultanément le positionnement de l'ensemble 12 de telle sorte que le passage 31 soit dans l'alignement de l'axe commun aux brides B$_1$ et B$_2$ aux tolérances près, et l'immobilisation en rotation de la pièce de référence 20 sur les brides en vis-à-vis. En variante, cette immobilisation en rotation peut aussi être assurée par un élément de référence extérieur indépendant des brides B$_1$ et B$_2$.

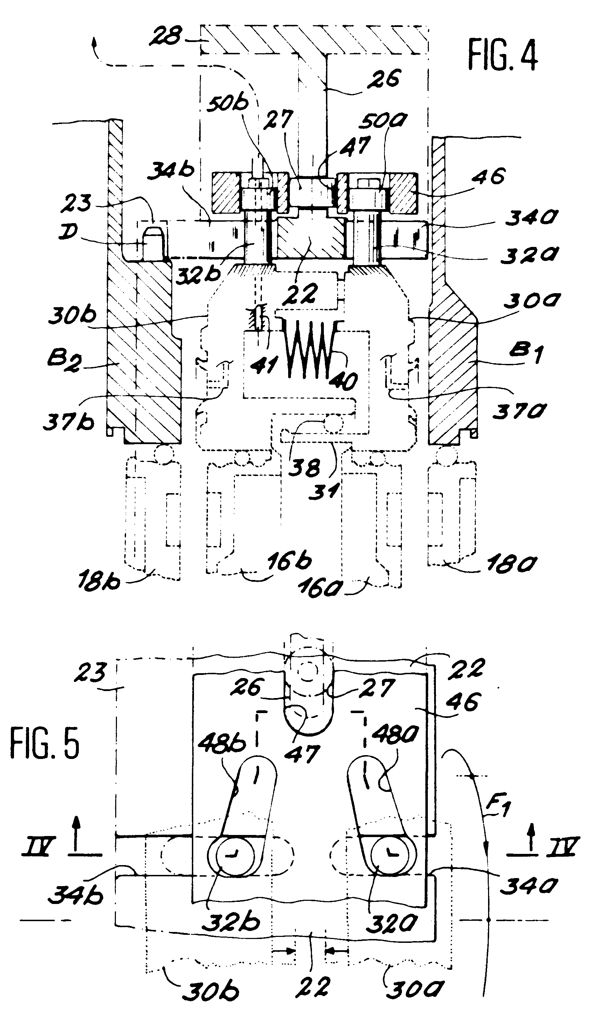

Comme le montrent notamment les figures 4 à 6, la bague 22 porte quatre pattes 26 qui s'étendent radialement vers l'extérieur à 90° les unes des autres. La pièce de référence 20 comprend de plus un cadre mécano-soudé 28 solidaire des extrémités des pattes 26.

Les deux pièces de liaison 30a et 30b sont montées à l'intérieur de la bague 22 de façon à pouvoir coulisser axialement indépendamment l'une de l'autre à l'intérieur de cette bague. A cet effet, chacune des pièces 30a et 30b porte à sa périphérie extérieure au moins trois tiges radiales 32a, 32b qui traversent des encoches 34a, 34b formées dans la bague 22 parallèlement à l'axe de celle-ci. Dans l'exemple représenté, l'une des encoches 34b reçoit également le doigt d'immobilisation D de la bride B$_2$. La largeur circonférentielle des encoches 34a et 34b est à peine supérieure au diamètre des tiges 32a et 32b, de sorte que les pièces 30a et 30b sont immobilisées en rotation à l'intérieur de la bague 22, tout en pouvant se déplacer parallèlement à l'axe de cette dernière.

Par ailleurs, chacune des pièces 30a et 30b présente une face radiale d'extrémité pourvue de deux gorges annulaires d'axe confondu avec l'axe du passage 31 et dans lesquelles sont fixés deux joints d'étanchéité à lèvres désignés respectivement par les références 36a et 36b (figure 3) pour les pièces 30a et 30b. Chacune des paires de joints à lèvres 36a et 36b peut venir s'appliquer contre une surface radiale correspondante formée sur la bride B$_1$, B$_2$ la plus proche, même si un décalage existe entre les axes des ouvertures O$_1$ et O$_2$. Les surfaces radiales formées sur les brides B$_1$, B$_2$ sont planes et sans aspérité, ce qui permet d'utiliser des brides soudées sur les parois des cellules. Une étanchéité par joint est ainsi évitée et la durée de vie des cellules s'en trouve accrue.

Les pièces 30a et 30b comportent de préférence des conduits ou passages 37a, 37b (figure 4) débouchant respectivement entre les paires de joints 36a et 36b. Chacun de ces passages peut être relié à un dispositif extérieur de contrôle d'étanchéité (non représenté).

Selon les conditions de fonctionnement du dispositif, les joints à lèvres 36a et 36b peuvent être disposés de différentes manières et l'espace formé entre les lèvres de chaque paire de joints peut être soit en dépression, soit en surpression.

Ainsi, lorsque l'intérieur des cellules C$_1$, C$_2$ est en dépression, les lèvres de chaque paire de joints 36a, 36b peuvent s'écarter l'une de l'autre comme l'illustrent les figures 3 et 4. On applique alors par les passages 37a, 37b une dépression supérieure à la dépression régnant dans les cellules, pour plaquer les lèvres des joints contre les brides. Une étanchéité statique est ainsi obtenue.

Lorsque l'intérieur des cellules C$_1$, C$_2$ est en dépression, les lèvres des joints 36a, 36b peuvent aussi être dirigées l'une vers l'autre. On applique alors par les passages 37a, 37b soit une surpression, soit une dépression inférieure à celle qui règne dans les cellules. Les lèvres des joints intérieurs sont ainsi plaquées contre les brides pour assurer une étanchéité statique. Simultanément, les lèvres des joints extérieurs sont soit plaquées contre les brides, soit assurent un balayage des espaces inter-lèvres par l'atmosphère extérieure, selon que la pression appliquée par les passages 37a, 37b est supérieure ou inférieure à la pression extérieure.

Lorsque les cellules C$_1$ et C$_2$ sont en dépression, les lèvres des joints 36a et 36b peuvent enfin être dirigées vers l'intérieur. On applique alors par les passages 37a, 37b une surpression supérieure à la dépression interne, qui a pour effet de plaquer les lèvres des joints extérieurs contre les brides et d'assurer un balayage de gaz depuis l'espace inter-lèvres vers l'intérieur des cellules. Cette configuration évite le dépôt de la contamination.

Lorsque l'intérieur des cellules C$_1$ et C$_2$ est en

surpression, les lèvres des joints 36a, 36b peuvent également s'écarter les unes des autres comme l'illustrent les figures 3 et 4. Dans ce cas, on applique par les passages 37a, 37b une dépression inférieure à la surpression interne. Les lèvres des joints sont alors plaquées contre les brides et assurent une étanchéité statique.

Lorsque les cellules sont en surpression et que les lèvres des joints sont dirigées l'une vers l'autre, on applique par les passages 37a et 37b une surpression inférieure ou supérieure à la pression régnant à l'intérieur des cellules. Les lèvres des joints extérieurs sont ainsi plaquées contre les brides. Simultanément, les lèvres des joints intérieurs sont soit plaquées contre les brides, soit assurent un balayage de l'espace inter-lèvres, selon que la pression appliquée par les passages 37a et 37b est supérieure ou inférieure à la pression dans les cellules.

Lorsque les cellules $C_1$ et $C_2$ sont en surpression, les lèvres des joints 36a et 36b peuvent aussi être dirigées vers l'extérieur. On applique alors par les passages 37a, 37b une pression supérieure à la pression interne, qui a pour effet de plaquer les lèvres des joints intérieurs contre les brides, assurant ainsi une étanchéité statique. En revanche, un balayage est assuré par les joints extérieurs de l'espace inter-lèvres vers l'extérieur.

Chacune des pièces de liaison 30a et 30b comporte une partie tubulaire 33a, 33b délimitant intérieurement le passage 31. Ces deux parties tubulaires présentent des diamètres différents et des longueurs telles que l'extrémité de la partie 33a est toujours située à l'intérieur de l'extrémité de la partie 33b, même lorsque l'écartement entre les pièces 30a et 30b est maximal. Un joint d'étanchéité torique 38 est interposé entre ces parties tubulaires, comme l'illustre la figure 3, de façon à assurer en permanence l'étanchéité entre ces deux parties.

Les pièces de liaison 30a et 30b sont également reliées de façon étanche par un soufflet d'étanchéité 40 entourant les parties tubulaires 33a et 33b et dont chacune des extrémités est fixée sur l'une des pièces 30a, 30b. De préférence, comme l'illustre la figure 3, ce soufflet d'étanchéité 40 est formé de rondelles élastiques adjacentes soudées entre elles alternativement par leurs bords périphériques intérieurs et extérieurs, afin que son épaisseur soit aussi réduite que possible.

Le joint 38 et le soufflet 40 assurent une double étanchéité entre le passage 31 et l'extérieur. Une chambre de controle d'étanchéité 42 est ainsi formée entre le joint 38 et le soufflet 40, à l'intérieur des pièces 30a et 30b. Cette chambre 42 peut être reliée par un passage 41 formé dans l'une des pièces 30a, 30b (figure 4) un dispositif extérieur de contrôle d'étanchéité (non représenté).

Cette configuration évite toute contamination intérieure du soufflet 40, ainsi que toute accumulation de particules solides ou liquides risquant de détériorer les ondes du soufflet. En plus des fonctions mentionnées précédemment, les passages 37a, 37b et 41 permettent un balayage des chambres inter-joints 36a, 36b, de la chambre 42 et, le cas échéant, du sas formé à l'intérieur des pièces de liaison 30a, 30b lorsque les doubles portes 14a, 14b sont en place. Il est ainsi possible de travailler sous atmosphère spécifique, en injectant cette atmosphère par les passages 37a, 37b et 41.

Comme on le voit sur la figure 3, des ressorts de compression 44 sont interposés entre les pièces de liaison 30a et 30b, à l'extérieur du soufflet 40, afin d'appliquer chacune de ces pièces contre la bride en vis-à-vis. Les ressorts 44 sont régulièrement répartis autour de l'axe de l'ensemble 12 et ils sont maintenus en place par exemple en étant emboîtés sur des plots 35a solidaires de la pièce 30a à une de leurs extrémités et en venant se loger dans des manchons 35b solidaires de la pièce 30b à leur extrémité opposée. Comme on le verra ultérieurement, ces ressorts 44 permettent d'appliquer de façon étanche les joints 36a, 36b contre les brides $B_1$ et $B_2$ même si un décalage angulaire existe entre les axes des ouvertures $O_1$ et $O_2$.

Dans la configuration qui vient d'être décrite, le soufflet 40 est protégé intérieurement par les parties tubulaires 33a et 33b des pièces de liaison et extérieurement par la bague 22. Par conséquent, tout risque pour que ce soufflet soit endommagé accidentellement par un objet est pratiquement évité.

Afin de commander le déplacement simultané des pièces de liaison 30a et 30b selon le cas en rapprochement ou en éloignement l'une de l'autre, on dispose autour de la bague 22 de la pièce de référence une couronne tournante 46 dont l'axe est confondu avec celui de la bague 22 et du passage 31. Cette couronne 46 est supportée de façon tournante autour de cet axe par la bague 22. A cet effet, elle est équipée à chacune de ses extrémités d'un certain nombre de galets qui roulent sur la surface extérieure de la bague 22. L'un de ces galets est représenté en 48 sur la figure 3.

Des fentes circonférentielles 47 sont formées dans la couronne 46, au droit des pattes 26, pour permettre le passage de celles-ci sans entraver la rotation de la couronne. De préférence (figures 4 et 5), des galets 27 portés par les pattes 26 coopèrent avec les bords des fentes 47, afin d'assurer le positionnement axial de la couronne 46 par rapport à la pièce de référence 20.

Comme le montre notamment la figure 5, la couronne 46 comporte également des fentes 48a et 48b inclinées de façon symétrique par rapport à un plan radial médian selon lequel sont formées les fentes 47. Les extrémités des tiges 32a et 32b pénètrent dans ces fentes 48a et 48b. Afin d'améliorer le guidage, on voit sur la figure 4 que les extrémités des tiges 32a et 32b portent des galets de guidage 50a, 50b qui coopèrent avec les bords des fentes 48a et 48b. Les fentes inclinées 48a et 48b forment ainsi des rampes assurant le guidage des galets montés aux extrémités des tiges 32a et 32b. La forme des fentes 48a, 48b est telle qu'une rotation de la couronne 46 autour de l'axe de l'ensemble 12 a pour effet, selon le sens de cette rotation, de déplacer les pièces de liaison 30a en écartement ou en rapprochement l'une de l'autre.

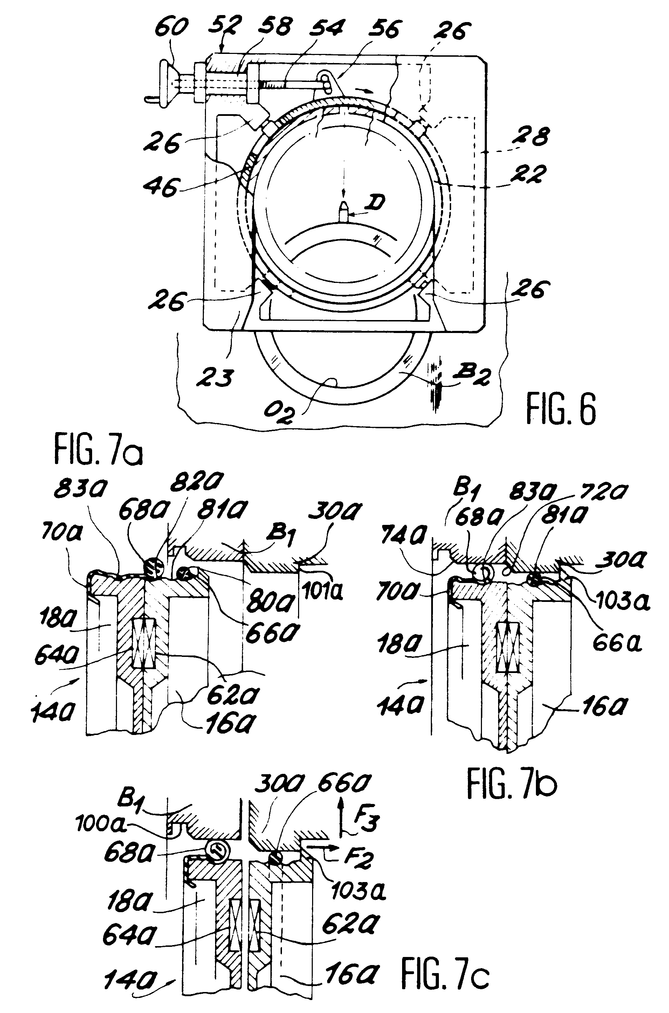

Dans l'exemple de réalisation représenté sur les figures 3 et 6, une telle rotation de la couronne 46 est commandée par un mécanisme 52 interposé entre cette couronne et le cadre 28. Plus précisément, ce mécanisme 52 comprend une tige filetée 54 dont une extrémité est articulée sur une patte 56 solidaire de la couronne 46. La tige filetée 54 est vissée dans un écrou 58 supporté de façon tournante par le cadre 28. Cet écrou 58 est relié à une manivelle 60 ou à un système de motorisation. L'actionnement de la manivelle 60 ou de la motorisation correspondante dans l'un ou l'autre sens assure la rotation désirée de la couronne 46 autour de son axe (flèche $F_1$ sur la figure 5).

Pour compléter la description du dispositif de raccordement selon l'invention, on se reportera à la figure 3 et aux figures 7a à 7c qui représentent plus en détail la structure de chacune des doubles portes 14a et 14b. Ces deux doubles portes étant identiques, seule la double porte 14a va maintenant être décrite. Les références des organes constituant la double porte 14b sont les mêmes, affectées de la lettre b.

Comme on l'a déjà mentionné, la double porte 14a comprend une porte 16a capable de venir obturer de façon étanche la pièce de liaison 30a et une porte 18a capable de venir obturer de façon étanche la bride $B_1$. Les portes 16a et 18a sont normalement accolées par deux surfaces planes ou sensiblement planes autorisant un certain glissement relatif entre les deux portes. La liaison entre les portes est assurée par des aimants 62a, 64a qui ne s'opposent pas à un tel glissement.

Chacune des portes 16a et 18a présente un bord périphérique extérieur approximativement cylindrique et de même diamètre. Cependant, le bord périphérique de la porte 16a prévue pour venir obturer de façon étanche la pièce de liaison 30a présente trois gorges annulaires 80a, 81a, 82a à section en arc de cercle disposées côte à côte, alors que le bord périphérique de la porte 18a présente une seule gorge 83a à section en arc de cercle à proximité de la porte 16a (figure 7a).

Sur la figure 7a, on a représenté la double porte 14a dans la position qu'elle occupe avant sa mise en place à l'intérieur de la pièce de liaison 30a et de la bride $B_1$. Dans ces conditions, on voit que la porte 16a prévue pour venir se loger dans la pièce 30a porte un joint d'étanchéité torique 66a monté dans la gorge 80a la plus éloignée de la porte 18a. Une extrémité d'une jupe étanche 70a entourant le bord périphérique de la porte 18a est fixée sur cette dernière, du côté opposé à la porte 16a. A son extrémité opposée, la jupe 70a est solidarisée d'un bourrelet torique 68a qui est logé dans la gorge 82a de la porte 16a la plus proche de la porte 18a. La jupe 70a recouvre alors en totalité le bord périphérique extérieur de la porte 18a ainsi que la jonction entre les deux portes.

Les formes de la surface intérieure cylindrique des ouvertures $O_1$ et $O_2$ formées sur les brides $B_1$ et $B_2$ et du passage 31 formé dans les pièces 30a et 30b apparaissent également plus en détail sur les figures 3 et 7a à 7c.

Ainsi, en partant de l'intérieur de la cellule $C_1$, l'ouverture cylindrique $O_1$ formée dans la bride $B_1$ comprend tout d'abord une gorge 100a (figure 7c) dont le rebord extérieur est interrompu pour permettre la fixation d'un outil par un système à baïonnette, comme on le verra ultérieurement. Cette ouverture $O_1$ comprend ensuite un chanfrein 74a (figure 7b) suivi d'une partie cylindrique de diamètre uniforme.

En partant de l'intérieur de la cellule $C_1$, le passage 31 formé dans la pièce 30a comprend quant à lui un chanfrein 72a (figure 7b) suivi d'une partie cylindrique de diamètre uniforme terminée par un épaulement 101a (figure 7a) tourné vers l'extérieur de la cellule. Le diamètre de la partie cylindrique du passage 31 est légèrement supérieur à celui de la partie cylindrique de l'ouverture $O_1$.

Au fur et à mesure que la double porte est emboîtée, comme on l'a représenté sur la figure 7b, le joint 66a et le bourrelet 68a roulent sur les bords périphériques extérieurs des portes, après le franchissement des chanfreins 72a et 74a, sous l'effet de leur coopération avec les surfaces intérieures cylindriques de la pièce de liaison 30a et de la bride $B_1$. Sous l'effet de ces roulements, le joint 66a passe dans la gorge centrale 81a de la porte 16a et le bourrelet 68a passe dans la gorge 83a de la porte 18a en s'enroulant sur la jupe 70a. Simultanément, une collerette souple 103a formée à l'extrémité du bord extérieur périphérique de la porte 16a tournée vers l'extérieur de la cellule $C_1$ vient en appui contre l'épaulement 101a. La collerette 103a peut être réalisée directement dans la porte 16a si celle-ci est réalisée en une matière plastique déformable. Elle peut aussi être rapportée. Chacune des deux portes 16a, 18a de la double porte est alors fixée de façon étanche respectivement à l'intérieur de la pièce de liaison 30a et à l'intérieur de la bride $B_1$.

Il est à noter que l'utilisation du bourrelet 68a formé à l'extrémité de la jupe 70a permet de protéger de la contamination régnant à l'intérieur des cellules le bord périphérique extérieur de chacune des portes de la double porte et l'espace formé entre ces portes.

Lorsque le dispositif est placé initialement entre deux cellules $C_1$ et $C_2$, seul l'ensemble 12 est utilisé. Comme l'illustrent notamment les figures 1 et 6, cet ensemble est mis en place de telle sorte que le berceau 23 formé sur la bague 22 vient coiffer la partie en saillie de la bride $B_2$ et soit immobilisé en rotation par le doigt D formé sur cette dernière. Bien entendu, cette mise en place est assurée alors que les deux pièces de liaison 30a et 30b sont rapprochées l'une de l'autre afin que leur épaisseur soit inférieure à la distance existant entre les brides $B_1$ et $B_2$.

Lorsque l'ensemble 12 est positionné et immobilisé entre les brides, le mécanisme 52 est actionné pour faire tourner la couronne 46 dans le sens correspondant à l'écartement des pièces de liaison 30a et 30b. Les joints à lèvres 36a et 36b portés par ces pièces sont ainsi appliqués de façon étanche contre les brides $B_1$ et $B_2$. Les ressorts 44 interposés entre les deux pièces permettent alors de compenser un éventuel décalage angulaire entre les axes des brides alors qu'un décalage radial entre les axes est également possible. Cette action des ressorts 44 est permise par le fait qu'il existe dans ces conditions un certain jeu axial entre les tiges 32a, 32b et les fentes 48a, 48b (figure 5).

Le dispositif de raccordement selon l'invention occupe la position ainsi établie dans les conditions normales d'exploitation des cellules $C_1$ et $C_2$. Il est à noter que la conception de l'ensemble 12 lui confère une épaisseur relativement réduite donnant au passage reliant les deux cellules une longueur peu importante. De ce fait, il est possible de transférer sans difficulté des objets d'une cellule à l'autre, par exemple à l'aide d'un télémanipulateur, ce qui ne serait pas possible avec un ensemble plus épais.

L'ensemble 12 procure en outre une double barrière d'étanchéité à tous les niveaux. Ainsi, le volume interne aux cellules $C_1$, $C_2$ et au passage 31 reliant celles-ci est séparé de l'extérieur par les deux joints 36a entre la pièce 30a et la bride $B_1$, par les deux joints 36b entre la pièce 30b et la bride $B_2$ et par le joint 38 et le soufflet d'étanchéité 40 entre les deux pièces de liaison 30a et 30b. En plus de son efficacité, on a vu précédemment que cette double étanchéité permet d'effectuer si nécessaire un contrôle des différents organes d'étanchéité.

Etant donné que tous les organes d'étanchéité sont portés par l'ensemble mobile 12, le dispositif selon l'invention permet en outre d'intervenir facilement sans rompre l'étanchéité des cellules lorsqu'un ou plusieurs de ces organes sont défectueux.

En effet, dans ces conditions, les deux doubles portes 14a et 14b sont mises en place de la manière décrite précédemment. Lorsque cette mise en place est terminée, le mécanisme 52 est mis en oeuvre dans le sens tendant à rapprocher les pièces de liaison 30a et 30b l'une de l'autre. Par construction, la force de fixation obtenue par les joints toriques 66a et 66b des portes 16a et 16b respectivement sur les pièces 30a et 30b est supérieure à la force de liaison entre les portes assurée par les aimants 62a, 64a et 62b, 64b. Le rapprochement des pièces 30a et 30b s'accompagne donc d'une séparation des portes 16a et 18a et 16b et 18b respectivement (flèche $F_2$ sur la figure 7c). L'ensemble 12 peut alors être démonté sans aucune rupture de l'étanchéité des volumes $V_1$ et $V_2$ ni du volume interne à cet ensemble (flèche $F_3$ sur les figures 2 et 7c). Un ensemble neuf identique à l'ensemble 12 peut ensuite être mis en place.

Les mêmes opérations sont effectuées lorsqu'une séparation des cellules $C_1$ et $C_2$ est nécessaire, par exemple lors du démantèlement de l'installation.

Le dispositif de raccordement selon l'invention peut également être utilisé comme un sas permettant de transférer certains produits entre une cellule $C_1$ contaminée et une cellule $C_2$ non contaminée. Les produits à transférer sont introduits de la cellule $C_1$ à l'intérieur du passage 31, après mise en place de la double porte 14b séparant ce passage de la cellule $C_2$. La double porte 14a séparant le passage 31 de la cellule $C_1$ est mise en place à son tour et une ventilation de l'atmosphère contenue dans le passage est effectuée. A cet effet, des tubulures d'entrée et de sortie communiquant avec un circuit extérieur de ventilation et de filtration débouchent alors dans le passage formé à l'intérieur des pièces 30a et 30b. Lorsque l'atmosphère interne au passage 31 a été suffisamment ventilée, la double porte 14b est ouverte et les produits sont introduits dans la cellule $C_2$.

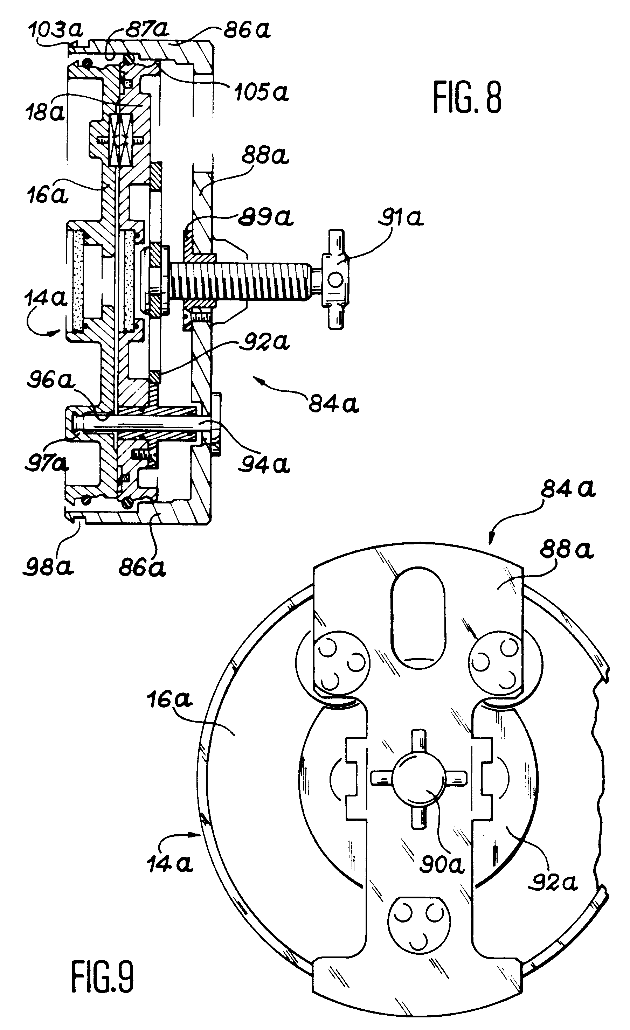

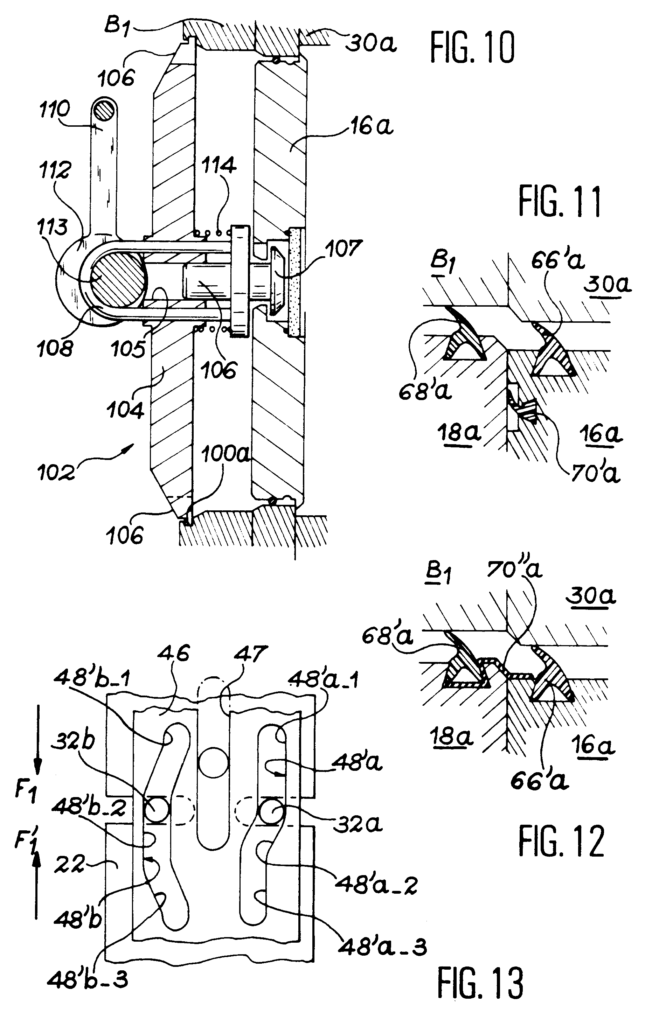

Comme l'illustrent les figures 8 et 9 pour la double porte 14a, afin d'assurer leur transport sans risque à l'intérieur des cellules, leur mise en place et leur maintien, à chacune des doubles portes 14a et 14b est associé à un outil lié à la porte 16a de la cellule.

Cet outil 84a comprend deux segments 86a en arc de cercle reliés par une plaque 88a portant en son centre un écrou 89a dans laquelle est vissée une vis 90a dont l'axe coïncide avec l'axe des segments 86a. L'extrémité de la vis 90a située du côté des segments est solidarisée en translation d'un flasque 92a lié à la porte 18a de la cellule, tout en pouvant tourner librement par rapport à la vis.

En outre, trois tiges de guidage 94a sont fixées sur la plaque 88a et font saillie du côté de cette extrémité de la vis 90a, parallèlement à l'axe de celle-ci. Ces tiges 94a traversent de façon étanche la porte 18a de la cellule et leurs extrémités sont reçues dans des trous borgnes 96a formés dans la porte 16a, lorsque les deux portes 16a et 18a sont en position de transport. La double porte 14a est verrouillée dans cette position comme l'illustre la figure 8, par l'engagement de nervures annulaires 97a formées à l'intérieur des trous borgnes 96a sur les gorges annulaires formées sur les tiges 94a. La double porte 14a est alors logée en totalité à l'intérieur d'un alésage étagé 87a formé dans les segments 86a. Une collerette flexible 105a formée à l'extrémité du bord périphérique de la porte 18a tournée vers l'intérieur de la cellule est alors en contact avec la partie de plus petit diamètre de cet alésage étagé, de façon à assurer le centrage de la double porte.

Comme le montre également la figure 8, une gorge annulaire 98a est formée sur la surface cylindrique extérieure des segments 86a, à proximité de son extrémité la plus éloignée de la plaque 88a. La forme de cette gorge 98a est complémentaire de la gorge 100a formée à l'extrémité de la surface intérieure cylindrique de la bride $B_1$ tournée vers l'intérieur de la cellule $C_1$. Ces deux extrémités constituent ainsi un système de verrouillage à baïonnette permettant de fixer par rotation l'outil 84a sur la bride $B_1$.

A son extrémité non liée à la porte 16a de la cellule $C_1$, la vis 90a est équipée d'une tête de manoeuvre 91a permettant de commander la rotation de la vis à distance à l'aide d'un télémanipulateur.

Lorsque l'outillage 84a est fixé sur la bride $B_1$ au moyen du système à baïonnette décrit ci-dessus, l'entraînement en rotation de la vis 90a a pour effet d'emboîter simultanément les deux portes 16a et 18a respectivement dans la pièce 30a et dans la bride $B_1$. Au cours de cette opération, les joints 66a et 68a coopèrent avec les surfaces intérieures de la pièce 30a et de la bride $B_1$ de la manière décrite précédemment. Comme on l'a vu, le verrouillage de la porte 16a est assuré par la pénétration de la collerette flexible 103a formée à sa périphérie au-delà de l'épaulement 101a formé dans la pièce 30a.

Dans ces conditions, les tiges 94a sont totalement dégagées des alésages borgnes formés dans la porte 16a, alors qu'elles obturent toujours de façon étanche les trous formés dans la partie 18a du conteneur. L'ensemble 12 portant les portes 16a et 16b peut ainsi être démonté de la manière décrite précédemment, alors que les portes 18a et 18b restent en place. A ce moment, il est à noter que l'outillage associé à chacune de ces portes 18a et 18b reste en place et constitue une sécurité empêchant toute ouverture accidentelle des portes correspondantes.

Une manoeuvre en sens inverse de la vis 90a permet d'extraire la porte 18a de la bride B . Au cours de cette opération, la porte 16a reste en place car la force exercée par les aimants 62a, 64a est insuffisante pour extraire cette porte de la pièce 30a.

Le démontage des portes 16a et 16b nécessite donc un second outil qui va maintenant être décrit brièvement en se référant à la figure 10.

L'outil 102 de la figure 10 est représenté lors du démontage de la porte 16a. Ce même outil ou un outil identique est utilisé pour démonter la porte 16b.

L'outil 102 comprend une barre 104 dont les extrémités en arc de cercle 106 ont une forme complémentaire de la gorge 100a formée à l'extrémité de la surface intérieure cylindrique de la bride $B_1$ tournée vers l'intérieur de la cellule $C_1$. La barre 104 peut ainsi être fixée dans la bride $B_1$ par un système à baïonnette, de façon à être orientée radialement par rapport à l'axe de cette bride.

La barre 104 est traversée en son centre par un alésage 105 dans lequel est reçue de façon coulissante une extrémité cylindrique d'une pièce de préhension 106. Les deux bras d'une pièce en U 108 sont fixés à leurs extrémités sur la pièce 106 et traversent des trous formés dans la barre 104 de part et d'autre de l'alésage 105. Cette pièce en U 108 immobilise ainsi en rotation la pièce 106 par rapport à la barre 104.

L'extrémité opposée de la pièce 106 constitue un nez de préhension 107 qui pénètre dans un évidement borgne formé au centre de la porte 16a, sur sa face tournée vers l'intérieur de la cellule $C_1$, lorsque les extrémités 106 de la barre 104 pénètrent dans la structure 100a. De plus, les formes respectives du nez de préhension 107 et de l'évidement sont telles que la rotation de la barre 104 permettant de fixer cette dernière sur la bride $B_1$ solidarise également en translation la porte 16a de la pièce de préhension 106.

L'outil 102 de la figure 10 comprend également une poignée de manoeuvre 110 solidaire d'un excentrique 112 dont la partie centrale 113, de plus petit diamètre et d'axe décalé par rapport à l'axe de l'excentrique, est emprisonnée entre la pièce en U 108 et la face de la barre 104 tournée vers l'intérieur de la cellule $C_1$. Un ressort de compression 114 prend appui par ses extrémités sur la face opposée de la barre 104 et sur la pièce de préhension 106, de façon à maintenir en permanence l'excentrique 112 en appui sur la barre 104.

Lorsque l'outil 102 est mis en place dans la bride $B_1$ de la manière décrite précédemment, la poignée 110 est placée dans la position illustrée sur la figure 10, dans laquelle la distance séparant le nez de préhension de la barre 104 est maximum. Dans ces conditions, la barre 104 est fixée sur la bride $B_1$ et la porte 16a saisie par la pièce de préhension 106.

En basculant la poignée 110, on exerce ensuite sur la porte 16a une force axiale qui a pour effet de l'extraire de la pièce 30a. Le démontage de la porte 16a est ainsi réalisé.

Bien entendu, le mode de réalisation qui vient d'être décrit peut subir différentes modifications sans sortir du cadre de l'invention.

Ainsi, au lieu d'associer à chaque double porte un joint torique simple et un joint à jupe de la manière décrite précédemment, notamment en se référant aux figures 7a à 7c, la protection de l'espace interportes contre la contamination et l'étanchéité de l'obturation peuvent être assurées séparément.

L'étanchéité de l'obturation peut notamment être assurée en équipant la surface périphérique extérieure de chacune des portes 16a et 18a d'une gorge dans laquelle est monté un joint à lèvres $66'a$, $68'a$ respectivement comme l'illustrent les figures 11 et 12.

Sur la figure 11, la protection de l'espace interportes contre la contamination est assurée par un joint d'étanchéité annulaire $70'a$ logé dans une gorge formée à la périphérie de la face de l'une des portes (16a sur la figure 11) tournée vers l'autre porte.

La figure 12 représente une autre solution, dans laquelle la protection de l'espace interportes contre la contamination est assurée par un bracelet d'étanchéité $70''a$, par exemple en caoutchouc, enroulé sur les parties adjacentes des surfaces périphériques extérieures des portes 16a et 18a. Ce bracelet est alors mis en place avant que la double porte ne soit introduite dans la cellule.

Bien entendu, le joint d'étanchéité $70'a$ de la figure 11 et le bracelet d'étanchéité $70''a$ de la figure 12 peuvent être utilisés avec des joints différents des joints à lèvres $66'a$ et $68'a$ représentés sur ces figures. Ces joints à lèvres peuvent notamment être remplacés par des joints toriques simples roulant entre deux gorges formées à la surface de chacune des portes.

Par ailleurs, le dispositif décrit en se référant aux figures 1 à 10 est conçu de telle sorte que l'enlèvement d'une cellule liée à deux cellules adjacentes par deux de ces dispositifs nécessite de mettre en place les deux doubles portes de chaque dispositif. En effet, les fentes 48a et 48b (figure 5) sont totalement symétriques, de sorte qu'une rotation de la couronne 46 conduit à rompre simultanément l'étanchéité entre chacune des pièces de liaison 30a, 30b et la bride $B_1$, $B_2$ de la cellule correspondante.

Sur la figure 13, on a représenté une variante de réalisation dans laquelle la forme des fentes $48'a$ et $48'b$ formées sur la couronne 46 permet de rétracter séparément soit la pièce de liaison 30a, soit la pièce de liaison 30b, la rétraction successive de ces deux pièces étant également possible.

Dans cette variante, chacune des fentes $48'a$ présente, en partant d'une extrémité, une partie circonférentielle $48'a$-1 parallèle aux fentes 47, une partie inclinée $48'a$-2 se rapprochant des fentes 47 et une autre partie circonférentielle $48'a$-3 parallèle aux fentes 47 et plus proche de celles-ci que la première partie circonférentielle. En partant de la même extrémité, chacune des fentes $48'b$ présente une partie inclinée $48'b$-1 s'éloignant des fentes 47, une partie circonférentielle $48'b$-2 parallèle aux fentes 47 et une autre partie inclinée $48'b$-3 se rapprochant des fentes 47. La longueur de la partie circonférentielle $48'b$-2 de chaque fente $48'b$ est légèrement supérieure à la longueur de la partie inclinée $48'a$-2 de chaque fente $48'a$, de telle sorte que, lorsque les galets 50b sont situés à l'une ou l'autre des extrémités de la partie circonférentielle $48'b$-2 des fentes $48'b$, les galets 50a sont déjà engagés dans l'une ou l'autre des parties circonférentielles $48'a$-1 et $48'a$-3 des fentes $48'a$.

La figure 13 représente la position occupée par la couronne 46 lorsque le dispositif est en place entre deux cellules. Les galets 50a sont alors situés à l'extrémité de la première partie circonférentielle $48'a$-1 des fentes $48'a$ adjacente à la partie inclinée $48'a$-2 de ces fentes et les galets 50b sont situés à l'extrémité de la partie circonférentielle $48'b$-2 des fentes $48'b$ adjacente à la première partie inclinée $48'b$-1 de ces fentes.

Si l'on désire séparer la pièce de liaison 30b de la bride de cellule correspondante, tout en maintenant la pièce de liaison 30a en appui étanche sur l'autre bride de cellule, on tourne la couronne 46 dans le sens de la flèche F1 sur la figure 13. Les tiges 32a se déplacent alors dans la première partie circonférentielle $48'a$-1 des fentes $48'a$, de sorte que la pièce 30a ne bouge pas. Simultanément, les tiges 32b se déplacent dans la première partie inclinée $48'b$-1 des fentes $48'b$, de sorte qu'elles se rapprochent des fentes 47, rétractant ainsi la pièce de liaison 30b.

Si au contraire on désire séparer la pièce de liaison 30a de sa bride de cellule sans rompre l'étanchéité entre la pièce de liaison 30b et l'autre bride de cellule, on tourne la couronne 46 dans le sens de la flèche $F'1$ inverse de celui de la flèche $F_1$, jusqu'à ce que les tiges 32b arrivent à l'extrémité de la partie circonférentielle $48'b$-2 des fentes 48′b adjacente aux deuxièmes parties inclinées 48′b-3 de ces fentes. Les tiges 32b se déplacent alors dans la partie circonférentielle 48′b-2 des fentes 48′b, de sorte que la pièce de liaison 30b reste en appui étanche contre la bride de cellule correspondante. Simultanément, les tiges 32a se déplacent dans la partie inclinée 48′a-2 des fentes 48′a, ce qui a pour effet de les rapprocher des fentes 47 et, par conséquent, de rétracter la pièce de liaison 30a.

Si l'on désire rétracter les deux pièces de liaison, on tourne la couronne 46 dans le sens de la flèche F′1 afin de rétracter la pièce 30a comme décrit ci-dessus, et on poursuit la rotation de la couronne afin que les tiges 32b parcourent également la deuxième partie inclinée 48′b-3 des fentes 48′b. Les tiges 32b se rapprochent alors de la fente 47, ce qui a pour effet de rétracter la pièce de liaison 30b par rapport à la bride de cellule correspondante. Simultanément, les tiges 32a parcourent la deuxième partie circonférentielle 48′a-3 des fentes 48′a, de sorte que la pièce de liaison 30a reste en position rétractée.

Grâce au dispositif de l'invention modifié selon la figure 13, il est possible de démonter une cellule reliée à deux cellules adjacentes par deux dispositifs conformes à l'invention, en ne mettant en place dans chacun de ces dispositifs qu'une double porte, qui est placée du coté de la cellule à démonter.

Un démontage du dispositif analogue à celui du dispositif des figures 1 à 11 est egalement toujours possible, puisqu'une rotation complète de la couronne 46 dans le sens de la fléche F′1 permet de rétracter les deux pièces de liaison 30a et 30b.

Il est à noter que le dispositif selon l'invention peut le cas échéant être fixé sur une bride de cellule pour permettre le raccordement d'une autre cellule, sans qu'aucun usinage complémentaire ne soit nécessaire. Des trous (non représentés) peuvent en effet être prévus par construction à la périphérie de l'une des pièces de liaison 30a, 30b pour permettre la fixation à l'aide de vis de cette pièce sur la bride d'une cellule. Les tiges correspondantes 32a ou 32b sont démontées et remplacées par des vis au moyen desquelles la bague 22 est fixée sur la pièce de liaison. La rotation de la couronne 46 permet alors de commander la rétraction de l'autre pièce de liaison.

Dans cette dernière configuration, le dispositif selon l'invention constitue un sas nécessitant une porte simple pour le séparer de la cellule sur laquelle il est fixé. Comme précédemment, le raccordement avec l'autre cellule nécessite l'utilisation d'une double porte. Cette configuration permet de réduire le coût lorsque la liaison entre les cellules ne nécessite pas de protection biologique.

En plus des avantages déjà mentionnés précédemment, le dispositif selon l'invention présente une longueur réduite permettant de donner à l'espace séparant les cellules une largeur très faible. Cette caractéristique permet d'éviter d'avoir recours à un convoyeur ou un système équivalent pour transporter les objets entre les cellules. Elle permet aussi, dans l'industrie nucléaire, de diminuer le matériau nécessaire au blindage et, par conséquent, le coût.

Le dispositif selon l'invention est en outre facile à mettre en place et admet des défauts importants de parallélisme, d'excentricité et d'écartement entre les cellules.

Par ailleurs, l'étanchéité entre les joints à lèvres portés par les pièces de liaison 30a, 30b et les brides de cellules $B_1$, $B_2$ est assurée par pression, sans aucune rotation relative entre ces pièces. Dans l'industrie nucléaire, cette caractéristique évite l'effet d'entraînement de la contamination qui se produit lorsque l'étanchéité est obtenue par une rotation relative. Cette étanchéité par simple pression évite aussi d'avoir recours à des systèmes de verrouillage. Par conséquent, elle supprime tout risque de grippage et évite que la mécanique soit endommagée par des déformations des parois des cellules dues à des pressions ou à des dépressions accidentelles.

La structure du dispositif de raccordement selon l'invention a aussi pour avantage de pouvoir être démontée même en cas de panne de son système de rétraction. En effet, étant donné qu'aucun obstacle n'interdit un déplacement radial de l'ensemble 12, il est toujours possible d'exercer sur celui-ci un effort suffisant dans cette direction pour l'extraire à l'encontre des frottements mécaniques existant entre les brides de cellules et les pièces de liaison 30a, 30b.

**Revendications**

1.   Dispositif de raccordement (10) déconnectable de deux enceintes étanches ($C_1$, $C_2$) présentant chacune une ouverture de raccordement ($O_1$, $O_2$) délimitée par une bride ($B_1$, $B_2$), les ouvertures de raccordement des deux enceintes étant approximativement alignées selon un axe commun ($A_1$, $A_2$) et les brides étant écartées l'une de l'autre d'une distance approximative donnée, ce dispositif présentant :

    - un ensemble (12) pour mettre en communication les ouvertures de raccordement ($O_1$, $O_2$) des enceintes, de façon étanche vis-à-vis de l'extérieur des enceintes, cet ensemble comprenant une pièce de référence (20) pourvue de moyens d'immobilisation par rapport aux brides ($B_1$, $B_2$) des cellules, deux pièces de liaison (30a, 30b) coopérant avec la pièce de référence par l'intermédiaire de moyens d'immobilisation en rotation (32a, 32b, 34a, 34b) autour de l'axe ($A_1$, $A_2$) des ouvertures de raccordement, ces pièces de liaison coopérant entre elles de façon étanche pour définir un passage interne apte à relier les ouvertures de raccordement, chacune des pièces de liaison (30a, 30b) portant au moins un organe d'étanchéité (36a, 36b) apte à venir en appui étanche sur l'une des brides ($B_1$, $B_2$), ledit ensemble (12) comprenant enfin des moyens (44, 46, 48a, 48b, 52) pour commander un déplacement relatif entre les pièces de liaison parallèlement audit axe, et

- au moins une double porte (14a, 14b) formée chacune de deux portes (16a, 18a, 16b, 18b) maintenues accolées par des organes magnétiques (62a, 64a, 62b, 64b) autorisant un glissement relatif limité entre les portes, ces deux portes pouvant venir s'emboîter de façon étanche respectivement à l'intérieur de l'ouverture de raccordement ($O_1$, $O_2$) formée dans la bride de l'une des enceintes et du passage formé dans la pièce de liaison adjacente (30a, 30b), lorsque ledit ensemble (12) assure une communication étanche entre les enceintes ($C_1$, $C_2$).

2. Dispositif selon la revendication 1, caractérisé en ce que la pièce de référence (20) comprend une bague (22) entourant les pièces de liaison (30a, 30b), les moyens d'immobilisation de ces dernières en rotation comprenant au moins une tige (32a, 32b) solidaire de chacune des pièces de liaison et faisant saillie radialement par rapport audit axe au travers d'une encoche (34a, 34b) formée dans ladite bague, parallèlement audit axe.

3. Dispositif selon la revendication 2, caractérisé en ce que les moyens pour commander un déplacement relatif entre les pièces de liaison comprennent une couronne (46) entourant ladite bague, des moyens (52) pour commander une rotation de cette couronne autour dudit axe, et des fentes (48a, 48b, $48'a$, $48'b$) formées sur la couronne et avec lesquelles coopèrent des extrémités en saillie desdites tiges (32a, 32b).

4. Dispositif selon la revendication 3, caractérisé en ce que les fentes (48a, 48b) formées sur la couronne (46) sont inclinées symétriquement en sens opposé par rapport à une direction circonférentielle, afin qu'une rotation de la couronne provoque un déplacement simultané et en sens inverse des pièces de liaison parallèlement audit axe.

5. Dispositif selon la revendication 3, caractérisé en ce que les fentes (48a, 48b) formées sur la couronne (46) comprennent des secteurs successifs différents, orientés circonférentiellement et inclinés par rapport à une direction circonférentielle, afin qu'une rotation de la couronne dans un premier sens (F1) provoque un déplacement d'une première des pièces de liaison parallèlement audit axe et qu'une rotation de la couronne en sens opposé ($F'1$) provoque successivement un déplacement de l'autre pièce de liaison, puis un déplacement en sens inverse de la première pièce de liaison parallèlement audit axe.

6. Dispositif selon l'une quelconque des revendications 3 à 5, caractérisé en ce que la pièce de référence comprend également un cadre (28) disposé à l'extérieur de la couronne (46), ce cadre étant solidarisé de la bague (22) par au moins trois pattes de fixation (26) orientées radialement et régulièrement réparties autour dudit axe, ces pattes traversant des fentes circonférentielles (47) formées dans la couronne, les moyens (52) pour commander une rotation de cette dernière autour dudit axe étant interposés entre le cadre (28) et la couronne (46).

7. Dispositif selon l'une quelconque des revendications 1 à 6, caractérisé en ce que des moyens élastiques (44) sont interposés entre les pièces de liaison (30a, 30b) pour solliciter ces dernières en écartement l'une de l'autre.

8. Dispositif selon l'une quelconque des revendications 1 à 7, caractérisé en ce que deux organes d'étanchéité concentriques (38, 40) définissant entre eux une chambre annulaire de contrôle d'étanchéité (42) entourant ledit passage sont interposés entre les deux pièces de liaison (30a, 30b).

9. Dispositif selon la revendication 8, caractérisé en ce que les deux organes d'étanchéité concentriques interposés entre les deux pièces de liaison (30a, 30b) comprennent un joint torique (38) interposé entre deux parties tubulaires desdites pièces, emmanchées l'une dans l'autre et délimitant ledit passage, et un soufflet d'étanchéité (40) entourant lesdites parties tubulaires et dont les extrémités sont fixées sur chacune des pièces de liaison.

10. Dispositif selon l'une quelconque des revendications 1 à 9, caractérisé en ce que chaque pièce de liaison (30a, 30b) porte deux joints à lèvres concentriques (36a, 36b) entourant ledit passage, aptes à venir en appui étanche sur l'une des brides ($B_1$, $B_2$).

11. Dispositif selon la revendication 9, caractérisé en ce qu'un conduit (37a, 37b) de contrôle d'étanchéité est formé dans chacune des pièces de liaison (30a, 30b) et débouche entre les joints à lèvres (36a, 36b).

12. Dispositif selon l'une quelconque des revendications 1 à 11, caractérisé en ce qu'une première (16a, 16b) des portes de chaque double porte (14a, 14b), apte à venir s'emboîter dans l'une des pièces de liaison (30a, 30b), comprend un bord périphérique extérieur présentant trois gorges adjacentes, la deuxième porte (18a, 18b) de chaque double porte, apte à venir s'emboîter dans l'une des brides ($B_1$, $B_2$), comprenant un bord périphérique extérieur présentant une autre gorge, un joint torique (66a, 66b) étant apte à rouler entre les deux gorges de la première porte les plus éloignées de la deuxième porte, sous l'effet de sa coopération avec une surface intérieure cylindrique de la pièce de liaison (30a, 30b), et un bourrelet torique (68a, 68b) formé à une extrémité d'une jupe (70a, 70b) entourant le bord périphérique de la deuxième porte (18a, 18b) et fixée à cette dernière par son extrémité opposée étant apte à rouler entre la gorge de la première porte (16a, 16b) la plus proche de la deuxième porte et la gorge de la deuxième porte, sous l'effet de sa coopération avec une surface intérieure cylindrique de la bride ($B_1$, $B_2$).

13. Dispositif selon l'une quelconque des revendications 1 à 11, caractérisé en ce que chacune des portes (16a, 16b, 18a, 18b) est munie d'un joint à lèvres ($66'a$, $68'a$) sur sa surface périphérique extérieure, l'une des portes de chaque double porte (14a, 14b) comportant un joint d'étanchéité annulaire ($70'a$) la périphérie de la face de cette porte tournée vers l'autre porte.

14. Dispositif selon l'une quelconque des revendications 1 à 11, caractérisé en ce que chacune des portes (16a, 16b, 18a, 18b) est munie d'un joint à lèvres ($66'a$, $68'a$) sur sa surface périphérique extérieure, le dispositif comprenant de plus, pour chaque double porte (14a, 14b), un bracelet d'étanchéité ($70''a$) apte à être enroulé sur les parties adjacentes des surfaces périphériques des portes (16a, 18a).

## Claims

1. Disconnectable device (10) for connecting two reactor containments ($C_1$, $C_2$) each having a connecting opening ($O_1$, $O_2$) delimited by a flange ($B_1$, $B_2$), the connecting openings of the two containments being approximately aligned according to a common axis ($A_1$, $A_2$) and the flanges being spaced at an approximate given distance, comprising:
an assembly (12) to place in communication the connecting openings ($O_1$, $O_2$) of the containments in a sealed way with respect to the exterior of the containments, this assembly comprising a reference part (20) provided with immobilization means with respect to the flanges ($B_1$, $B_2$) of the cells, two linking parts (30a, 30b) cooperating with the reference part by means of rotary immobilization means (32a, 32b, 34a, 34b) around the axis ($A_1$, $A_2$) of the connecting openings, these linking parts cooperating together in a sealed way so as to define an internal passage suitable for connecting the connecting openings, each of the linking parts (30a, 30b) bearing at least one sealing device (36a, 36b) suitable for sealingly bearing on one of the flanges ($B_1$, $B_2$), said assembly (12) finally comprising means (44, 46, 48a, 48b, 52) to control a relative displacement between the linking parts parallel to said axis, and
at least one double door (14a, 14b) each formed of two doors (16a, 18a, 16b, 18b) kept attached by magnetic devices (62a, 64a, 62b, 64b) authorizing a limited relative sliding between the doors, these two doors which can be fitted in a sealed way respectively inside the connecting opening ($O_1$, $O_2$) formed in the flange of one of the containments and the passage formed in the adjacent linking part (30a, 30b) when said assembly ensures a sealed communication between the containments ($C_1$, $C_2$).

2. Device as recited in claim 1, characterized in that the reference part (20) includes a ring (22) encompassing the linking parts (30a, 30b), the means to rotary immobilize the latter comprising at least one rod ((32a, 32b) integral with each of the linking parts and projecting radially with respect to said axis through a notch (34a, 34b) formed in said ring parallel to said axis.

3. Device as recited in claim 2, characterized in that the means to control a relative displacement between the linking parts comprise a collar (46) encompassing said ring, means (52) to rotary control this collar around said axis, and slits (48a, 48b, 48'a, 48'b) formed on the collar and with which cooperate are the projecting extremities of said rods (32a, 32b).

4. Device as recited in claim 3, characterized in that the slits (48a, 48b) formed on the collar (46) are slanted symmetrically in the opposite direction with respect to a circumferential direction so that a rotation of the collar provokes a simultaneous displacement and in the opposite direction of the linking parts parallel to said axis.

5. Device as recited in claim 3, characterized in that the slits (48a, 48b) formed on the collar (46) include different successive sectors oriented circumferentially and slanted with respect to a circumferential direction so that a rotation of the collar in a first direction (F1) provokes a displacement of a first linking part parallel to said axis and a rotation of the collar in the opposite direction (F'1) successively provokes a displacement of the other linking part, and then a displacement in the opposite direction of the first linking part parallel to said axis.

6. Device as recited in any one of the claims 3 to 5, characterized in that the reference part also includes a frame (28) disposed outside the collar (46), this frame being rendered integral with the ring (22) by at least three fixing feet (26) oriented radially and regularly distributed around said axis, these feet traversing circumferential slits (47) formed in the collar, and means (52) for controlling a rotation of the latter around said axis being inserted between the frame (28) and the collar (46).

7. Device as recited in any one of the claims 1 to 6, characterized in that elastic means (44) are inserted between the linking parts (30a, 30b) so as to stress the latter when spacing them from each other.

8. Device as recited in any one of the claims 1 to 7, characterized in that two concentric sealing devices (38, 40), defining between them an annular sealing control chamber (42) encompassing said passage, are inserted between the two linking parts (30a, 30b).

9. Device as recited in claim 8, characterized in that the two concentric sealing devices inserted between the two linking parts (30a, 30b) comprise an O-ring (38) inserted between two tubular sections of said parts, one being fitted inside the other and delimiting said tubular sections and a bellows (40) surrounding said tubular sections, whose extremities are secured to each of the linking parts.

10. Device as recited in any one of the claims 1 to 9, characterized in that each linking part (30a, 30b) carries two concentric lip seals (36a, 36b) encompassing said passage and suitable for bearing tightly on one of the flanges ($B_1$, $B_2$).

11. Device as recited in claim 9, characterized in that a sealing control conduit (37a, 37b) is formed inside each of the linking parts (30a, 30b) and opens between the lip seals (36a, 36b).

12. Device as recited in any one of the claims 1 to 11, characterized in that a first door (16a, 16b) of each double door (14a, 14b) suitable for being fitted in one of the linking parts (30a, 30b) includes an exterior peripheral edge having three adjacent grooves, the second door (18a, 18b) of each double door suitable for being fitted inside one of the flanges ($B_1$, $B_2$) comprising an exterior peripheral edge having another groove, an O-ring (66a, 66b) being suitable for rolling between the two grooves of the first door furthest from the second door under the effect of its cooperation with an interior cylindrical surface of the linking part (30a, 30b), and a toric flange (68a, 68b) formed at an extremity of a skirt (70a, 70b) encompassing the peripheral edge of the second door (18a, 18b) and secured to the latter by its opposite extremity being suitable for rolling between the groove of the first door nearest the second door and the groove of the second door under the effect of its cooperation with an interior cylindrical surface of the flange ($B_1$, $B_2$).

13. Device as recited in any one of the claims 1 to 11, characterized in that each of the doors (16a, 16b, 18a, 18b) is provided with a lip seal (66'a, 68'a) on its outer peripheral surface, one of the doors of each double door (14a, 14b) comprising a ring seal (70'a) at the periphery of the face of this door turned towards the other door.

14. Device as recited in any one of the claims 1 to 11, characterized in that each of the doors (16a, 16b, 18a, 18b) is provided with a lip seal (66'a, 68'a) on its outer peripheral surface, the device also comprising, for each double door (14a, 14b), a sealing flange (70"a) suitable for being wound onto the adjacent sections of the peripheral surfaces of the doors (16a, 16b).

**Patentansprüche**

1. Vorrichtung zur lösbaren Verbindung (10) zweier dichter Hohlräume ($C_1$, $C_2$), die jeweils eine von einem Flansch ($B_1$, $B_2$) begrenzte Verbindungsöffnung ($O_1$, $O_2$) aufweisen, wobei die Verbindungsöffnungen der beiden Hohlräume ungefähr entlang einer gemeinsamen Achse ($A_1$, $A_2$) ausgerichtet sind und die Flansche voneinander um einen ungefähren, gegebenen Abstand entfernt sind, wobei diese Vorrichtung aufweist:

   - eine Anordnung (12), um die Verbindungsöffnungen ($O_1$, $O_2$) der beiden Hohlräume dicht gegenüber dem Äußeren der Hohlräume miteinander in Verbindung zu bringen, wobei diese Anordnung ein Referenzelement (20) umfaßt, das mit einer Feststellvorrichtung bezüglich der Flansche ($B_1$, $B_2$) der Zellen versehen ist, wobei zwei Verbindungselemente (30a, 30b) mit dem Referenzelement über eine Feststellvorrichtung für die Drehung (32a, 32b, 34a, 34b) um die Achse ($A_1$, $A_2$) der Verbindungsöffnungen zusammenwirken, wobei diese Verbindungselemente untereinander auf dichte Weise zusammenwirken, um einen internen Durchgang zu bilden, der geeignet ist, die Verbindungsöffnungen zu verbinden, wobei jedes der Verbindungselemente (30a, 30b) wenigstens ein Dichtungselement (36a, 36b) trägt, das geeignet ist, sich dicht gegen einen der Flansche ($B_1$, $B_2$) zu stützen, wobei die Anordnung (12) schließlich noch Vorrichtungen (44, 46, 48a, 48b, 52) umfaßt, um eine relative Bewegung parallel zu der Achse zwischen den Verbindungselementen zu steuern, und

   - wenigstens eine Doppeltür (14a, 14b), die jeweils aus zwei Türen (16a, 18a, 16b, 18b) geformt ist, die durch magnetische Elemente (62a, 64a, 62b, 64b) zusammengehalten werden, die ein begrenztes, relatives Gleiten zwischen den Türen ermöglichen, wobei diese beiden Türen jeweils dicht in das Innere der Verbindungsöffnung ($O_1$, $O_2$), die in den Flansch der einen der beiden Hohlräume geformt ist, und des in das benachbarte Verbindungselement (30a, 30b) geformten Durchgangs eingefügt werden können, sobald die Anordnung (12) eine dichte Verbindung zwischen den beiden

   Hohlräumen ($C_1$, $C_2$) sicherstellt.

2. Vorrichtung nach Anspruch 1, dadurch gekennzeichnet, daß das Referenzelement (20) einen Ring (22) umfaßt, der die Verbindungselemente (30a, 30b) umgibt, wobei die Drehfesthaltevorrichtungen für diese letzteren wenigstens eine Stange (32a, 32b) umfassen, die an jedem der Verbindungselemente befestigt ist und radial bezüglich der Achse durch eine parallel zur Achse in den Ring geformte Kerbe (34a, 34b) vorsteht.

3. Vorrichtung nach Anspruch 2, dadurch gekennzeichnet, daß die Vorrichtungen zum Steuern einer relativen Bewegung zwischen den Verbindungselementen eine Krone (46), die den Ring umgibt, Vorrichtungen (52) zum Steuern einer Rotation dieser Krone um die Achse und in der Krone geformte Kerben (48a, 48b, 48'a, 48'b) umfassen, mit denen vorstehende Enden der Stangen (32a, 32b) zusammenwirken.

4. Vorrichtung nach Anspruch 3, dadurch gekennzeichnet, daß die auf der Krone (46) geformten Einkerbungen (48a, 48b) symmetrisch entgegen einer Umfangsrichtung geneigt sind, damit eine Drehung der Krone eine gleichzeitige Bewegung in entgegengesetzter Richtung parallel zur Achse der Verbindungselemente bewirkt.

5. Vorrichtung nach Anspruch 3, dadurch gekennzeichnet, daß die auf der Krone (46) geformten Einkerbungen (48a, 48b) verschiedene, aufeinanderfolgende Sektoren umfaßt, die auf dem Umfang ausgerichtet und bezüglich einer Umfangsrichtung geneigt sind, damit eine Drehung der Krone in eine erste Richtung (F1) eine Bewegung eines ersten Verbindungselements parallel zur Achse bewirkt und damit eine Drehung der Krone in die umgekehrte Richtung (F'1) sukzessive eine Bewegung des anderen Verbindungselements, dann eine Bewegung des ersten Verbindungselements parallel zur Achse in die umgekehrte Richtung bewirkt.

6. Vorrichtung nach einem der Ansprüche 3 bis 5, dadurch gekennzeichnet, daß das Referenzelement gleichfalls einen Rahmen (28) umfaßt, der am Äußeren der Krone (46) angeordnet ist, wobei dieser Rahmen an dem Ring (22) mit wenigstens drei Befestigungsklauen befestigt ist, die radial ausgerichtet sind und regelmäßig um die Achse verteilt sind, wobei diese Klauen die in die Krone geformten Umfangseinkerbungen (47) durchquert, wobei die Vorrichtungen (52) zum Steuern der Drehung der letzteren um die Achse zwischen dem Rahmen (28) und der Krone (46) angeordnet sind.

7.   Vorrichtung nach einem der Ansprüche 1 bis 6, dadurch gekennzeichnet, daß elastische Vorrichtungen (44) zwischen den Verbindungselementen (30a, 30b) angeordnet sind, um letztere in einem Abstand voneinander zu beanspruchen.

8.   Vorrichtung nach einem der Ansprüche 1 bis 7, dadurch gekennzeichnet, daß zwei konzentrische Dichtungselemente (38, 40), die zwischen sich eine ringförmige Dichtungskontrollkammer (42) bilden, die den Durchgang umgibt, zwischen den beiden Verbindungselementen angeordnet sind.

9.   Vorrichtung nach Anspruch 8, dadurch gekennzeichnet, daß die beiden konzentrischen Dichtungselemente, die zwischen den beiden Verbindungselementen (30a, 30b) angeordnet sind, eine ringförmige Verbindung (38), die zwischen zwei röhrenförmigen Bereichen der Elemente angeordnet ist, die übereinandergeschoben sind und den Durchlaß begrenzen, und einen Dichtungsbalg (40) umfassen, der die röhrenförmigen Bereiche umgibt und dessen Ende an jedem der Verbindungselemente befestigt sind.

10.  Vorrichtung nach einem der Ansprüche 1 bis 9, dadurch gekennzeichnet, daß jedes Verbindungselement (30a, 30b) zwei Verbindungen mit konzentrischen Lippen (36a, 36b) umfaßt, die den Durchlaß umgeben und geeignet sind, sich dicht auf eine der Flansche ($B_1$, $B_2$) zu stützen.

11.  Vorrichtung nach Anspruch 9, dadurch gekennzeichnet, daß eine Dichtungskontrolleitung (37a, 37b) in jedem Verbindungselement (30a, 30b) geformt ist und zwischen den Lippenverbindungen (36a, 36b) mündet.

12.  Vorrichtung nach einem der Ansprüche 1 bis 11, dadurch gekennzeichnet, daß eine erste der Türen (16a, 16b) jeder Doppeltür (14a, 14b), die geeignet ist, in eines der Verbindungselemente (30a, 30b) eingefügt zu werden, einen äußeren, peripheren Rand aufweist, der drei aneinandergrenzende Vertiefungen aufweist, wobei die zweite Tür (18a, 18b) jeder Doppeltür, die geeignet ist, in einen der beiden Flansche ($B_1$, $B_2$) eingefügt zu werden, einen äußeren, peripheren Rand, der eine weitere Vertiefung aufweist, wobei eine ringförmige Verbindung (66a, 66b) geeignet ist, zwischen den beiden Vertiefungen der ersten Tür, die am weitesten von der zweiten Tür entfernt sind, unter dem Einfluß ihres Zusammenwirkens mit einer inneren, zylindrischen Oberfläche des Verbindungselements (30a, 30b) zu rollen, und einen ringförmigen Wulst (68a, 68b) aufweist, der an einem Ende einer Schürze (70a, 70b) geformt ist, die den peripheren Rand der zweiten Tür (18a, 18b) umgibt und an letzterer mit seinem gegenüberliegenden Ende befestigt ist, das geeignet ist, zwischen der Vertiefung der ersten Tür (16a, 16b), die am nächsten zur zweiten Tür ist, und der Vertiefung der zweiten Tür unter dem Einfluß seines Zusammenwirkens mit einer inneren, zylindrischen Oberfläche der Flansch ($B_1$, $B_2$) zu rollen.

13.  Vorrichtung nach einem der Ansprüche 1 bis 11, dadurch gekennzeichnet, daß jede der Türen (16a, 18a, 16b, 18b) mit einer Lippenverbindung (66'a, 68'a) an seiner äußeren, peripheren Oberfläche versehen ist, wobei eine der Türen jeder Doppeltür (14a, 14b) eine ringförmige Dichtungsverbindung (70a') an der Peripherie der Seite dieser Tür umfaßt, die zur anderen Tür gewandt ist.

14.  Vorrichtung nach einem der Ansprüche 1 bis 11, dadurch gekennzeichnet, daß jede der Türen (16a, 18a, 16b, 18b) mit einer Lippenverbindung (66'a, 68'a) an seiner äußeren, peripheren Oberfläche versehen ist, wobei die Vorrichtung außerdem für jede Doppeltür (14a, 14b) einen Dichtungsring (70"a) umfaßt, der geeignet ist, auf den benachbarten Bereichen der peripheren Oberflächen der Türen (16a, 18a) aufgerollt zu werden.

FIG. 1

FIG. 2

17

FIG. 3

EP 0 312 460 B1

FIG. 4

FIG. 5

FIG. 6

FIG. 7a

FIG. 7b

FIG. 7c

FIG. 8

FIG.9

FIG. 10

$B_1$

106

110

112

114

113

108 105

104

102

106

16a

107

100a

106

FIG. 11

$B_1$

66'a

30a

68'a

18a

16a

70'a

FIG. 13

48'b-1 46 47 48'a-1

32b

$F_1$

48'b-2

$F_1'$

22

48'b

48'b-3

48'a

32a

48'a-2

48'a-3

$B_1$ 70''a

30a

68'a

18a

16a

66'a

FIG. 12